# EUROPEAN PATENT APPLICATION

(11) **EP 3 065 456 A1**
(43) Date of publication of application: **07.09.2016**
(21) Application number: 14858324.8
(22) Date of filing: 08.10.2014
(51) Int. Cl.: H04W 28/10, H04W 80/06

(54) **USER EQUIPMENT AND METHOD**

(30) Priority: 31.10.2013 JP 2013227129
(71) Applicant: NTT DOCOMO, INC., Chiyoda-ku Tokyo 100-6150 (JP)
(72) Inventor: UCHINO, Tooru, Tokyo 100-6150 (JP); HANAKI, Akihito, Tokyo 100-6150 (JP)
(74) Representative: Hoffmann Eitle
(86) International application number: PCT/JP2014/076884
(87) International publication number: WO 2015/064318

(57) **Abstract**

Some techniques for preventing delay of updating a PDCP reception window in user equipment due to packet discarding are provided. One aspect of the present invention relates to user equipment comprising: a transmission and reception unit configured to transmit and receive a packet to/from a base station; a PDCP layer processing unit configured to determine for a PDCP (Packet Data Convergence Protocol) packet received from the base station whether a sequence number of the PDCP packet is within a reception window and perform a PDCP layer operation on the PDCP packet having the sequence number falling within the reception window; and a reception window updating determination unit configured to determine whether the packet received from the base station is a predefined updating trigger packet for causing the reception window to be updated and if the received packet is the updating trigger packet, cause the PDCP layer processing unit to update the reception window.

## Description

### TECHNICAL FIELD

The present invention relates to a radio communication system.

### BACKGROUND ART

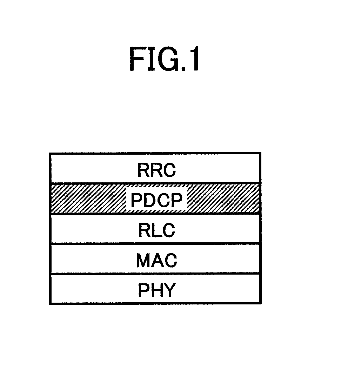

In a LTE (Long Term Evolution) system, packet-based radio communication is used. In this packet-based radio communication, the radio communication is implemented by performing various functions for radio communication in multiple hierarchized layers. In the LTE system, it is defined that the radio communication is implemented in a layer structure as illustrated in FIG. 1. As illustrated in FIG. 1, a PHY (Physical) layer, a MAC (Media Access Control) layer, a RLC (Radio Link Control) layer, a PDCP (Packet Data Convergence Protocol) layer and a RRC (Radio Resource Control) layer are used.

Among them, the PDCP layer provides functions such as ciphering, tampering detection and header compression of IP (Internet Protocol) packets. In the ciphering and the tampering detection, a COUNT value composed of a HFN (Hyper Frame Number) and a PDCP SN (Sequence Number) is used.

The PDCP SN is incremented for each transmission of a PDCP packet from the PDCP layer to the RLC layer, and the PDCP SNs ranging from "0" to "4095" are cyclically assigned to the PDCP packets. For example, the sequence number "0" is assigned to a PDCP packet transmitted to the RLC layer next to a PDCP packet of the sequence number "4095". Each time the PDCP SN wraps around, the HFN is incremented, and the HFNs ranging from "0" to "1048576" are assigned to PDCP packets. The COUNT value is arranged to have the HFN in upper bits and the PDCP SN in lower bits. In the LTE system, only the PDCP SN in the COUNT value is transmitted to the receiver side, and the HFN is not transmitted. Accordingly, the receiver side must estimate the HFN of the received packet from reception status.

Briefly overviewing operations in the PDCP layer, in the transmitter side, a PDCP entity uses the COUNT value to perform ciphering, tampering detection and header compression on packets received from an upper layer, that is, PDCP SDUs (Service Data Units) and transmits PDCP packets having PDCP SNs attached headers, that is, PDCP PDUs (Packet Data Units), to the RLC layer.

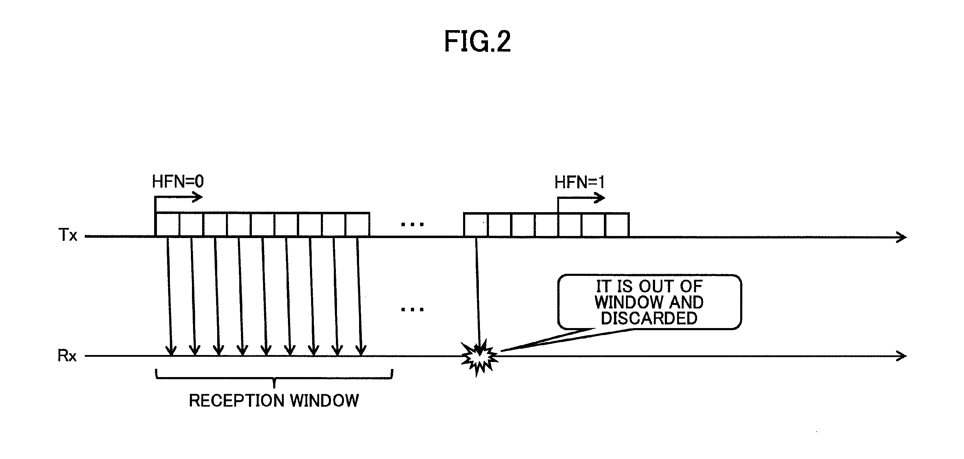

In the receiver side, on the other hand, the PDCP entity manages a reception window for reordering received packets as illustrated in FIG. 2. In the LTE system, the size of the reception window is set to 2047, which is 1/2 of the upper limit "4095" of the PDCP SN. In the case where the PDCP SN of a packet received from the transmitter side is within the reception window, the PDCP entity estimates the HFN for use in deciphering the packets from current reception status and performs the deciphering on the received packets based on the COUNT value composed of the estimated HFN and the PDCP SN in the header. After that, the PDCP entity transmits the resulting packets to the upper layer and updates the reception window. In the case where the PDCP SN of the packet received from the transmitter side is not within the reception window, on the other hand, the PDCP entity discards the packet.

See 3GPP TS 36.323 V8.6.0 (2009-06) for further details, for example.

### SUMMARY OF INVENTION

### [PROBLEM TO BE SOLVED BY THE INVENTION]

In the current LTE system, it is defined that the PDCP reception window is updated only at reception timings of the PDCP PDU. Accordingly, if a large amount of PDCP PDUs is discarded at the PDCP entity in the transmitter side, there is a likelihood that the reception window may not be appropriately updated at the PDCP entity in the receiver side. At the PDCP entity in the transmitter side, the PDCP PDU may be discarded in cases as set forth.

As the first case, it is considered that the PDCP entity in the transmitter side discards a large number of PDCP PDUs. The PDCP entity in the transmitter side discards the PDCP PDUs in response to overflowing of a buffer or expiration of a Discard Timer. If a large amount of PDCP PDUs is discarded, mismatch of the COUNT value (HFN+PDCP SN) may arise between user equipment (UE) and a base station (evolved NodeB: eNB), which may cause interruption of U-plane. Specifically, if the PDCP PDUs having the COUNT value of the PDCP PDU last mapped to a transport block through the COUNT value obtained by adding the size 2047 of the reception window are successively discarded, subsequent PDCP PDUs would be out of the reception window, and all the subsequent PDCP PDUs would be discarded. Accordingly, the PDCP entity in the transmitter side has to cause the PDCP entity in the receiver side to update the reception window appropriately such that the transmitted PDCP PDUs can be always within the reception window.

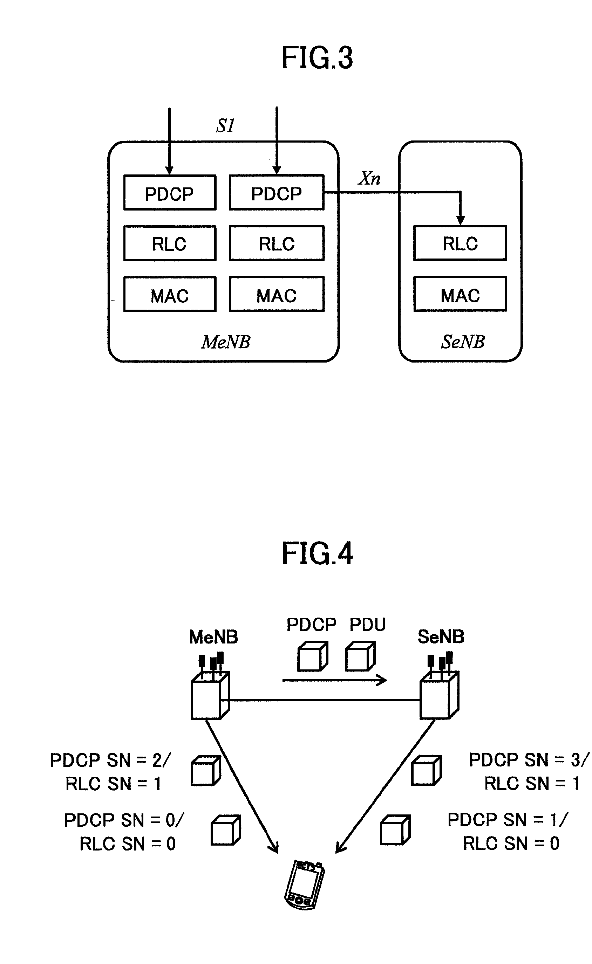

As the second case, packet discarding in Inter-eNB CA (Carrier Aggregation) is considered. In 3GPP Release 12, the Inter-eNB CA is being discussed to improve throughput by performing carrier aggregation among different eNBs. A U-plane architecture in the Inter-eNB CA as illustrated in FIG. 3 is discussed. In the illustrated architecture, when the PDCP entity in a Master-eNB receives data from a network device via a S1 interface, the PDCP entity distributes the data to a Secondary-eNB via an Xn interface in accordance with a predefined distribution rule. The throughput of the user equipment can be improved through carrier aggregation between the Master-eNB and the Secondary-eNB. In this case, the PDCP entity in the user equipment serving as the receiver side has to reorder two RLC streams transmitted from the Master-eNB and the Secondary-eNB.

In this Inter-eNB CA, when PDCP PDUs are received out-of-sequence from the transmitter side, the PDCP entity in the receiver side cannot determine whether the missing PDCP PDUs have been discarded at the eNB or are being presently transmitted over the air. As a result, the user equipment has to wait for the missing PDCP PDUs for a predefined period and temporarily buffer received subsequent PDCP PDUs. After that, upon receiving further subsequent PDCP PDUs from both the Master-eNB and the Secondary-eNB, the PDCP entity in the receiver side can determine that the missing PDCP PDUs are not in transmission over the air but have been discarded.

However, if all the PDCP PDUs are discarded at any eNB of the Master-eNB and the Secondary-eNB, the PDCP entity in the receiver side cannot receive subsequent PDCP PDUs from that eNB and detect whether the PDCP PDUs have been discarded at the eNB. From this reason, the PDCP entity in the receiver side would wait for the discarded PDCP PDUs for a predefined period. In this case, SACK (Selective Acknowledgement) transmission in the TCP (Transmission Control Protocol) layer is delayed, and RTO (Retransmission Time Out) occurs in the worst case, which may decrease the throughput significantly.

Packet discarding in the Inter-eNB CA is described with reference to an example. FIG. 4 is a schematic view illustrating exemplary packet transmission in the Inter-eNB CA. As illustrated in FIG. 4, user equipment uses the Inter-eNB CA to communicate with a Master-eNB (MeNB) and a Secondary-eNB (SeNB). For packets received from an upper station such as a network device, the MeNB transmits PDCP PDUs having even-numbered PDCP SNs from itself to the user equipment and forwards PDCP PDUs having odd-numbered PDCP SNs to the SeNB for transmission from the SeNB to the user equipment. According to this distribution rule, if no packet is discarded, as illustrated, the user equipment first receives the PDCP PDU having PDCP SN=0 as RLC SN=0 from the MeNB and then receives the PDCP PDU having PDCP SN=2 as RLC SN=1. On the other hand, the user equipment first receives the PDCP PDU having PDCP=1 as RLC SN=0 from the SeNB and then receives the PDCP PDU having PDCP SN=3 as RLC SN=1. Supposedly, if the user equipment receives the PDCP PDU having PDCP SN=1 from the SeNB before receiving the PDCP PDU having PDCP SN=0 from the MeNB, the user equipment would activate a Reordering Timer in the PDCP layer and wait for the PDCP PDU having PDCP SN=0 from the MeNB. This waiting time would correspond to the maximum times of RLC retransmission in the worst case.

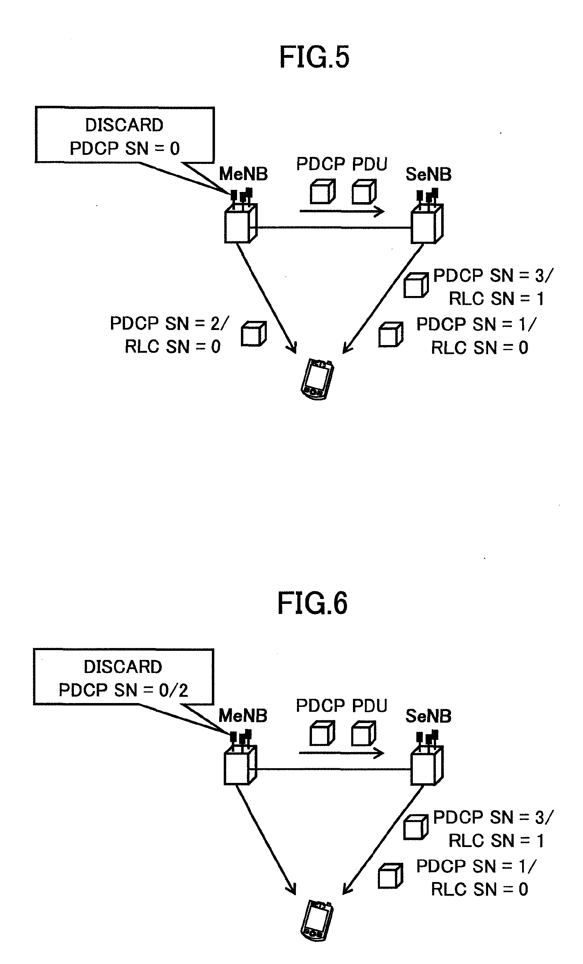

FIG. 5 is a schematic view illustrating an exemplary case where a portion of data is discarded at the Master-eNB. As illustrated in FIG. 5, it is assumed that the PDCP PDU having PDCP SN=0 has been discarded at the MeNB. In this case, the user equipment would receive the PDCP PDU having PDCP SN=1 from the SeNB before receiving the PDCP PDU having PDCP SN=0 from the MeNB and accordingly would activate the Reordering Timer in the PDCP layer. After that, at a timing of receiving the PDCP PDU having PDCP SN=2 from the MeNB, the user equipment can determine that the PDCP PDU having PDCP SN=0 has been discarded, stop the Reordering Timer and update the reception window in the PDCP layer with PDCP SN=2.

FIG. 6 is a schematic view illustrating an exemplary case where all data are discarded at the Master-eNB. As illustrated in FIG. 6, it is assumed that the PDCP PDUs having PDCP SN=0, 2 have been discarded at the MeNB. In this case, the user equipment would receive the PDCP PDU having PDCP SN=1 from the SeNB before receiving the PDCP PDU having PDCP SN=0 from the MeNB and accordingly activate the Reordering Timer in the PDCP layer. However, the user equipment could not also receive the subsequent PDCP PDU having PDCP SN=2 and accordingly could not determine that the PDCP PDUs having PDCP SN=0, 2 have been discarded until the Reordering Timer expires. At a result, the SACK reply in the TCP layer is delayed, which may decrease the throughput significantly.

In this manner, if the PDCP PDUs are successively discarded at the PDCP entity in the transmitter side, there is a likelihood that the reception window cannot be updated at the PDCP entity in the receiver side appropriately.

In light of the above problem, one object of the present invention is to provide some techniques for preventing delay of updating the PDCP reception window in the user equipment due to packet discarding.

### [MEANS FOR SOLVING THE PROBLEM]

In order to overcome the above problem, one aspect of the present invention relates to user equipment comprising: a transmission and reception unit configured to transmit and receive a packet to/from a base station; a PDCP layer processing unit configured to determine for a PDCP (Packet Data Convergence Protocol) packet received from the base station whether a sequence number of the PDCP packet is within a reception window and perform a PDCP layer operation on the PDCP packet having the sequence number falling within the reception window; and a reception window updating determination unit configured to determine whether the packet received from the base station is a predefined updating trigger packet for causing the reception window to be updated and if the received packet is the updating trigger packet, cause the PDCP layer processing unit to update the reception window.

### [ADVANTAGE OF THE INVENTION]

According to the present invention, it is possible to prevent delay of updating the PDCP reception window in the user equipment due to packet discarding.

### BRIEF DESCRIPTION OF DRAWINGS

FIG. 1 is a schematic view illustrating a layer structure in LTE;
FIG. 2 is a schematic view illustrating an exemplary operation in a PDCP layer;
FIG. 3 is a schematic view illustrating an exemplary U-plane architecture of a Master-eNB and a Secondary-eNB;
FIG. 4 is a schematic view illustrating exemplary packet transmission in Inter-eNB CA;
FIG. 5 is a schematic view illustrating an exemplary case where a portion of data is discarded at the Master-eNB;
FIG. 6 is a schematic view illustrating an exemplary case where all data are discarded at the Master-eNB;
FIG. 7 is a schematic view illustrating a radio communication system according to one embodiment of the present invention;
FIG. 8 is a block diagram illustrating an arrangement of user equipment according to one embodiment of the present invention; and
FIG. 9 is a flowchart illustrating a reception window updating operation in user equipment according to one embodiment of the present invention.

### EMBODIMENTS OF THE INVENTION

Embodiments of the present invention are described below with reference to the drawings.

Briefly overviewing embodiments of the present invention as described below, user equipment for preventing delay of updating a reception window in a PDCP layer for packet discarding at a base station is disclosed. In embodiments described below, a predefined updating trigger packet is transmitted from a base station to user equipment so as to cause a reception window to be updated. Upon determining that the packet received from the base station is the updating trigger packet, the user equipment updates the reception window in the PDCP layer. As a result, even if packets are discarded at the base station, the user equipment can update the reception window without waiting for the discarded packets, which can avoid occurrence of HFN mismatch between the user equipment and the base station. Also, in the Inter-eNB CA, it is possible to avoid a likelihood that packets received from the base station which does not invoke packet discarding may be discarded at the user equipment as not being within the reception window due to delayed updating of the reception window.

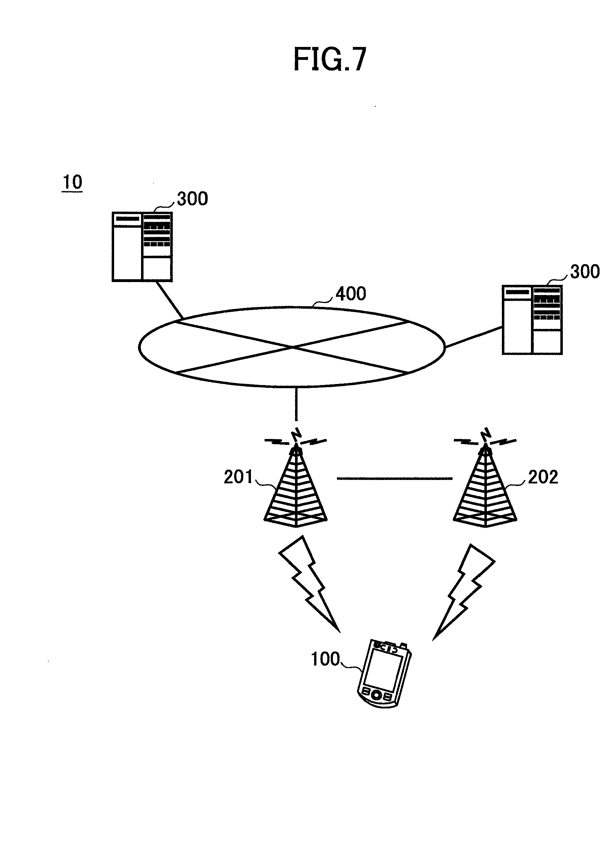

At the outset, a radio communication system according to one embodiment of the present invention is described with reference to FIG. 7. In embodiments described below, the radio communication system is a LTE system or a LTE-Advanced system, but the present invention is not limited to them. The present invention can be applied to any other radio communication system having a layer structure similar to the LTE system or the LTE-Advanced system.

FIG. 7 is a schematic view illustrating a radio communication system according to one embodiment of the present invention. As illustrated in FIG. 7, a radio communication system 10 has user equipment (UE) 100, base stations (eNBs) 201, 202, a network device 300 and a network 400. In the illustrated embodiment, the radio communication system 10 supports the Inter-eNB CA, and the user equipment 100 communicates with the base station (Master-eNB) 201 and the base station (Secondary-eNB) 202 in the Inter-eNB CA, as illustrated. However, the radio communication system 10 is not limited to it and may be any other radio communication system having the layer structure as illustrated in FIG. 1 similar to the LTE-Advanced system such as the LTE system, although the LTE system does not support the Inter-eNB CA.

The user equipment 100 may be typically any appropriate information processing device having a radio communication function, such as a cellular phone, a smartphone, a tablet and a mobile router, as illustrated. The user equipment 100 manages a reception window for reordering received packets in a PDCP layer. In LTE specification, the size of the reception window is set to 2047 corresponding to 1/2 of the upper limit "4095" of PDCP SN. If the PDCP SN of a packet received from the base stations 201, 202 falls within the window, the user equipment 100 estimates a HFN for use in deciphering of the packet based on current reception status and performs the deciphering on the received packet based on a COUNT value composed of the estimated HFN and the PDCP SN attached to a header. After operations in the PDCP layer are performed, the user equipment 100 updates or shifts the reception window. On the other hand, if the PDCP SN of the packet received from the base stations 201, 202 is not within the reception window, the user equipment 100 discards the packet.

In a typical hardware configuration, the user equipment 100 has a CPU (Central Processing Unit) such as a processor, a memory device such as a RAM (Random Access Memory) and a flash memory, a radio communication device for transmission and reception of radio signals to/from the base stations 201, 202 and the like. For example, functions and operations of the user equipment 100 as described below are implemented by the CPU executing data and programs stored in the memory device.

The base stations 201, 202 sends the user equipment 100 downlink (DL) packets received from the network device 300, such as an upper station or a server, communicatively connected over the network 400 and sends the network device 300 uplink (UL) packets received from the user equipment 100 through radio connection between the user equipment 100 and the base stations 201, 202.

The base stations 201, 202 performs PDCP layer operations in the PDCP layer, such as ciphering, tampering detection and header compression, on PDCP SDUs received from the upper layer and transmits PDCP packets generated as PDCP PDUs to the RLC layer. In the ciphering and the tampering detection, a COUNT value including a HFN and a PDCP SN is used. The PDCP SN is incremented for each transmission of the PDCP packets from the PDCP layer to the RLC layer, and the PDCP SN ranging from "0" to "4095" is cyclically assigned to the PDCP packets. Also, each time the PDCP SN wraps around, the HFN is incremented, and the HFN ranging from "0" to "1048576" is assigned to the PDCP packets. The COUNT value is arranged to have the HFN in upper bits and the PDCP SN in lower bits. In the LTE system, only the PDCP SN is written in a header of the PDCP packet and is indicated to the user equipment 100 serving as the receiver side. On the other hand, the HFN is not written in the PDCP packet, and the user equipment 100 in the receiver side must estimate the HFN to decipher received packets based on the reception status and the PDCP SN.

Also, the base stations 201, 202 temporarily stores packets destined for the user equipment 100 received from the network device 300 in a buffer and in response to a predefined discarding event, discards the packets remaining in the buffer. For example, if PDCP/RLC SDUs greater than or equal to a threshold remain in the buffers in the base stations 201, 202, the base stations 201, 202 discard the PDCP/RLC SDUs from the buffers. Also, the base stations 201, 202 use a timer (Discard Timer) for counting the remaining time for audio data packets required to have a real time property, and when the timer expires for a predefined period, the base stations 202, 202 discard the PDCP/RLC SDUs from the buffers.

The radio communication system 10 supports the Inter-eNB CA, and in the illustrated embodiments, the base station 201 serves as a Master-eNB (MeNB) whereas the base station 202 serves as a Secondary-eNB (SeNB). Specifically, the master base station 201 controls the Inter-eNB CA communication with the user equipment 100 to distribute a portion of packets destined for the user equipment 100 received from the network device 300 to the secondary base station 202 for transmission to the user equipment 100 via the master base station 201 and the secondary base station 202. This distribution rule may be based on the PDCP SN of PDCP PDUs of packets received from the network device 300. For example, the PDCP PDUs having the even-numbered PDCP SNs are distributed to the secondary base station 202 and are transmitted from the secondary base station 202 to the user equipment 100. On the other hand, the PDCP PDUs having the odd-numbered PDCP SNs may be transmitted from the master base station 201 to the user equipment 100. This distribution rule is merely exemplary, and any other appropriate distribution rule may be used.

The network device 300 is a server for a service provider on the network 400, a management node for managing the user equipment 100 and the base stations 201, 202 and the like. The network device 300 sends the base stations 201, 202 various data to be provided to the user equipment 100.

The network 400 is a network of an operator of the radio communication system 10, the Internet and the like. The base stations 201, 202 and the network device 300 exchange IP packets via the network 400.

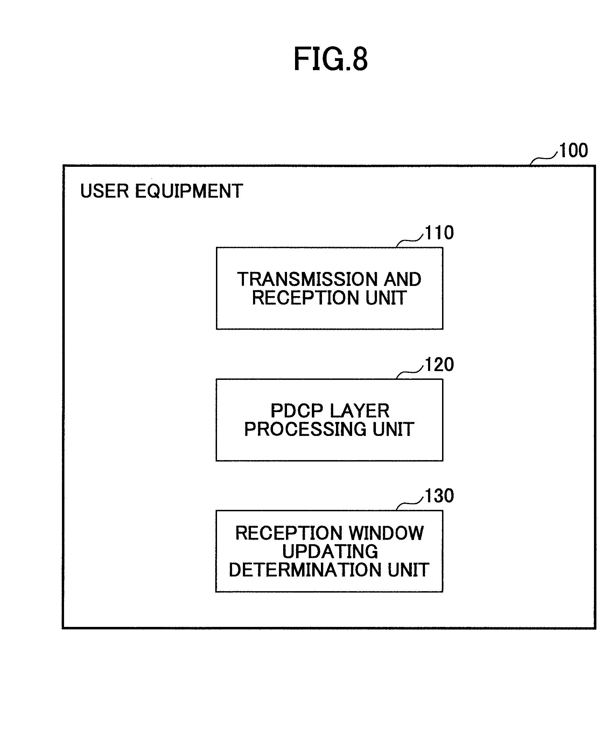

Next, an arrangement of user equipment according to one embodiment of the present invention is described with reference to FIG. 8. FIG. 8 is a block diagram illustrating an arrangement of user equipment according to one embodiment of the present invention.

As illustrated in FIG. 8, user equipment 100 has a transmission and reception unit 110, a PDCP layer processing unit 120 and a reception window updating determination unit 130.

The transmission and reception unit 110 transmits and receives a packet to/from the base stations 201, 202. Specifically, the transmission and reception unit 110 performs various radio operations, such as encoding, modulation and multiplexing, for conversion of to-be-transmitted data into radio signals destined for the base stations 201, 202 and transmits the generated radio signals to the base stations 201, 202. Also, the transmission and reception unit 110 performs various radio operations, such as demultiplexing, demodulation and decoding, on the radio signals received from the base stations 201, 202 to obtain data.

The PDCP layer processing unit 120 determines for a PDCP packet received from the base stations 201, 202 whether a sequence number (PDCP SN) of the PDCP packet is within a reception window and performs a PDCP layer operation on the PDCP packet having the sequence number falling within the reception window. The PDCP layer processing unit 120 manages the reception window for reordering received packets in the PDCP layer. In the LTE specification, the size of the reception window is set to 2047 corresponding to 1/2 of an upper limit "4095" of the PDCP SN. If the PDCP SN of a packet received from the base stations 201, 202 is within the reception window, in the PDCP layer, the PDCP layer processing unit 120 estimates a HFN for use in deciphering the packet based on current reception status and performs deciphering on the received packet based on a COUNT value including the estimated HFN and the PDCP SN attached to a header. After execution of the PDCP layer operation, the PDCP layer processing unit 120 updates or shifts the reception window with that PDCP SN. On the other hand, if the PDCP SN of the packet received from the base stations 201, 202 is not within the reception window, the PDCP layer processing unit 120 discards the packet.

The reception window updating determination unit 130 determines whether the packet received from the base stations 201, 202 is a predefined updating trigger packet for causing the reception window to be updated and if the received packet is the updating trigger packet, causes the PDCP layer processing unit 120 to update the reception window. As the updating trigger packet, special PDCP PDUs as described below may be defined, or a RRC message for causing the reception window to be updated by RRC signaling may be used.

In one embodiment, the updating trigger packet may be a PDCP packet having only a header part. In other words, this PDCP packet has no payload part and is arranged as a special PDCP packet including only the header part. If this special PDCP packet is used as the updating trigger packet, the reception window updating determination unit 130 determines whether the size of a PDCP packet received from the base stations 201, 202 is equal to a PDCP header size and if the size of the received PDCP packet is equal to the PDCP header size, causes the PDCP layer processing unit 120 to update the reception window. In other words, since the updating trigger packet has no payload part and consists of only the header part, the size of the packet will be equal to the header size of a normal PDCP packet. From this reason, upon determining that the size of the received PDCP packet is equal to the header size of the normal PDCP packet, the reception window updating determination unit 130 can determine that the received PDCP packet is the updating trigger packet. Upon determining that the received PDCP packet is the updating trigger packet, the reception window updating determination unit 130 instructs the PDCP layer processing unit 120 to retrieve the PDCP SN from the header part of the PDCP packet and update the reception window with the retrieved PDCP SN. According to this embodiment, the reception window can be properly updated without changing current PDCP control significantly, and even if packets are successively discarded at the base stations 201, 202, it is possible to avoid HFN mismatch between the user equipment 100 and the base stations 201, 202.

In one embodiment, the updating trigger packet may be a PDCP data packet having a header part including a bit indicating that the PDCP data packet is the predefined updating trigger packet for causing the reception window to be updated. Specifically, a predefined bit indicating that it is the predefined updating trigger packet for causing the reception window to be updated is provided in the header part of the PDCP data packet. For example, if a PDCP data packet is the updating trigger packet, the bit may be set to "1" by the base stations 201, 202, and if the PDCP data packet is not the updating trigger packet, the bit may be set to "0" by the base stations 201, 202. In the case where this PDCP data packet is used as the updating trigger packet, the reception window updating determination unit 130 determines whether the predefined bit in the header part of a PDCP data packet received from the base stations 201, 202 indicates that the PDCP data packet is the updating trigger packet and if the bit indicates that the PDCP data packet is the updating trigger packet, causes the PDCP layer processing unit 120 to update the reception window. Specifically, the reception window updating determination unit 130 can determine whether the received PDCP data packet is the updating trigger packet by determining the predefined bit in the header part of the PDCP data packet received in a U-plane. Upon determining that the received PDCP data packet is the updating trigger packet, the reception window updating determination unit 130 instructs the PDCP layer processing unit 120 to retrieve the PDCP SN from the header part of the PDCP data packet and update the reception window with the retrieved PDCP SN. According to this embodiment, the reception window can be properly updated without changing current PDCP control significantly, and even if packets are successively discarded at the base stations 201, 202, it is possible to avoid HFN mismatch between the user equipment 100 and the base stations 201, 202.

The above-stated PDCP packet having only the header part and the above-stated PDCP data packet having a predefined bit indicating that it is the updating trigger packet may be transmitted to the user equipment 100 with a higher priority than that of other PDCP packets. As a result, the user equipment 100 can be caused to update the reception window more reliably.

In one embodiment, the updating trigger packet may be a PDCP control packet including a value of an upper end or a lower end of the reception window to be configured by the PDCP layer processing unit 120. In other words, this PDCP control packet serves to indicate the updated reception window in a C-plane. In the case where this PDCP control packet is used as the updating trigger packet, upon detecting the value of the upper end or the lower end of the reception window to be configured by the PDCP layer processing unit 120 in the PDCP control packet received from the base stations 201, 202, the reception window updating determination unit 130 causes the PDCP layer processing unit 120 to update the reception window with the detected value of the upper end or the lower end. According to this embodiment, the reception window can be updated with the PDCP SN properly specified by the base stations 201, 202 discarding packets, and even if the packets are successively discarded at the base stations 201, 202, it is possible to avoid HFN mismatch between the user equipment 100 and the base stations 201, 202.

In one embodiment, the updating trigger packet may be a PDCP control packet including discarding information regarding a PDCP packet discarded by the base stations 201, 202. Here, the discarding information is information regarding PDCP packets discarded by the PDCP entity in the base stations 201, 202 serving as the transmitter side and may include the number of discarded PDCP packets, their sequence numbers and/or COUNT values, for example. Note that the discarding information may be signaled in an existing PDCP Status Report. Upon detecting the discarding information regarding the PDCP packet discarded by the base station in the PDCP control packet received from the base stations 201, 202, the reception window updating determination unit 130 causes the PDCP layer processing unit 120 to update the reception window based on the detected discarding information. For example, if the detected discarding information indicates that successive X PDCP packets are discarded at the base station 201, the PDCP layer processing unit 120 can update the reception window in accordance with the sequence number of PDCP packets received from the base station 202 without waiting for the subsequent X PDCP packets after a PDCP packet last received from the base station 201. According to this embodiment, it is possible to avoid delay of updating the reception window originating from discarding packets at the base stations 201, 202, and it is avoidable that the PDCP packets received at the user equipment 100 are discarded as a result of determining that the packets are not within the reception window due to the delayed updating.

The fact that the user equipment 100 supports the various updating trigger packets as stated above may be explicitly indicated to the base stations 201, 202 in a Capability or may be implicitly indicated to the base stations 201, 202 by transmitting the updating trigger packets supported by the user equipment 100 to the base stations 201, 202. In other words, the transmission and reception unit 110 may use a Capability or transmit the updating trigger packet to indicate to the base stations 201, 202 that the user equipment 100 is capable of updating the reception window by the updating trigger packet.

Also, in the case where the fact that the user equipment 100 supports the updating trigger packet is explicitly indicated to the base stations 201, 202 in the Capability, the transmission and reception unit 110 may transmit the Capability to the base stations 201, 202 for each mode of a RLC AM (Acknowledged Mode) and a RLC UM (Unacknowledged Mode). Presently, the reordering operation in the PDCP layer is not defined for a RLC UM bearer. Accordingly, the RLC UM bearer may have an reordering function in the PDCP layer.

In one embodiment, the updating trigger packet may be a RRC (Radio Resource Control) message including a value of an upper end or a lower end of the reception window to be configured by the PDCP layer processing unit 120. In other words, the RRC message serves to indicate the updated reception window in a C-plane. In the case where the RRC message is used as the updating trigger packet, upon detecting the value of the upper end or the lower end of the reception window to be configured by the PDCP layer processing unit 120 in the RRC message received from the base stations 201, 202, the reception window updating determination unit 130 causes the PDCP layer processing unit 120 to update the reception window with the detected value of the upper end or the lower end. According to this embodiment, the reception window can be updated with the PDCP SN properly specified by the base stations 201, 202 discarding packets, and even if the packets are successively discarded at the base stations 201, 202, it is possible to avoid HFN mismatch between the user equipment 100 and the base stations 201, 202.

In one embodiment, the updating trigger packet may be a RRC message including discarding information regarding a PDCP packet discarded by the base stations 201, 202. Here, the discarding information is information regarding PDCP packets discarded by the PDCP entity in the base stations 201, 202 serving as the transmitter side and may include the number of discarded PDCP packets, their sequence numbers and/or COUNT values, for example. Note that the discarding information may be signaled by using a format of an existing PDCP Status Report. Upon detecting the discarding information regarding the PDCP packet discarded by the base stations 201, 202 in the RRC message received from the base stations 201, 202, the reception window updating determination unit 130 causes the PDCP layer processing unit 120 to update the reception window based on the detected discarding information. According to this embodiment, it is possible to avoid delay of updating the reception window originating from discarding packets at the base stations 201, 202, and it is avoidable that the PDCP packets received at the user equipment 100 are discarded as a result of determining that the packets are not within the reception window due to the delayed updating.

Transmission of the updating trigger packet by RRC signaling as stated above may be involved in intra-cell handover. In this case, since U-plane transmission is suspended, it is avoidable that other PDCP packets unnecessarily interrupt and accordingly the RRC message is discarded as being out of the reception window.

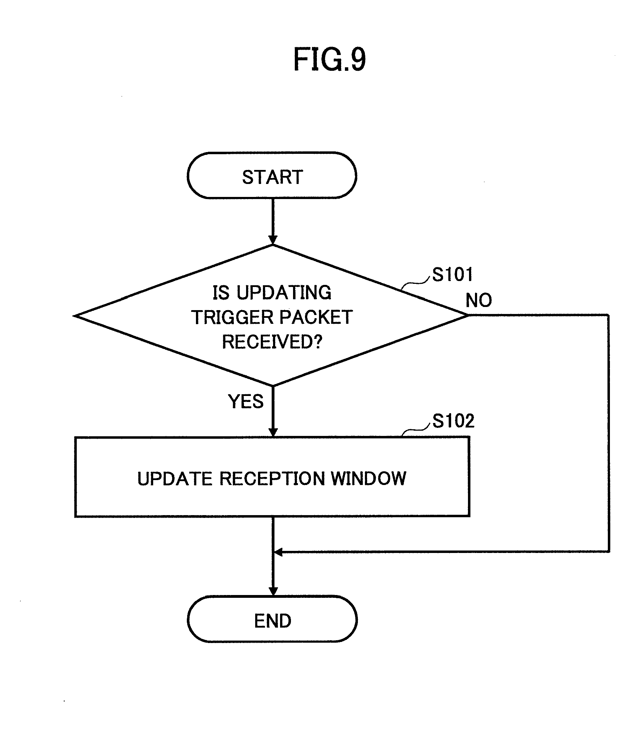

Next, a reception window updating operation in the user equipment according to one embodiment of the present invention is described with reference to FIG. 9. FIG. 9 is a flowchart illustrating a reception window updating operation in the user equipment according to one embodiment of the present invention.

This operation starts during reception at the user equipment 100 of PDCP packets from the base stations 201, 202. In the reception operation, the user equipment 100 determines for a PDCP packet received from the base stations 201, 202 whether the sequence number of the PDCP packet is within a reception window and performs a PDCP layer operation on the PDCP packet having the sequence number falling within the reception window to update the reception window.

As illustrated in FIG. 9, at step S101, the user equipment 100 determines whether the packet received from the base stations 201, 202 is a predefined updating trigger packet for causing the reception window to be updated. As the updating trigger packet, for example, a PDCP packet having only a header part, a PDCP data packet having a header part including a bit indicating that it is the updating trigger packet, a PDCP control packet including a value of an upper end or a lower end of the reception window to be configured by the PDCP layer processing unit 120, a PDCP control packet including discarding information regarding a PDCP packet discarded by the base stations 201, 202, a RRC message including a value of an upper end or a lower end of the reception window to be configured by the PDCP layer processing unit 120, or a RRC message including discarding information regarding a PDCP packet discarded by the base stations 201, 202 may be used. If the received packet is any of the above-stated updating trigger packet, the user equipment 100 determines that the packet is the updating trigger packet. Here, the user equipment 100 may indicate to the base stations 201, 202 which of the above-stated updating trigger packets is supported by the user equipment 100 by transmitting a Capability beforehand or transmitting the supported updating trigger packets beforehand.

At step S102, if the received packet is the updating trigger packet, the user equipment 100 updates the reception window. For example, if the updating trigger packet is the PDCP packet having only the header part or the PDCP data packet having the header part including the bit indicating that it is the updating trigger packet, the user equipment 100 may update the reception window with the sequence number of this packet. Alternatively, if the updating trigger packet is the PDCP control packet or the RRC message including a value of the upper end or the lower end of the reception window to be configured by the PDCP layer processing unit 120, the user equipment 100 may update the reception window with the value of the upper end or the lower end. Alternatively, if the updating trigger packet is the PDCP control packet or the RRC message including the discarding information regarding a PDCP packet discarded by the base stations 201, 202, the user equipment 100 may update the reception window based on the discarding information.

Although the different updating trigger packets have been described in the above embodiments, two or more of them may be used.

Although the embodiments of the present invention have been described in detail, the present invention is not limited to the above-stated specific embodiments, and various modifications and variations can be made within the spirit of the present invention as recited in claims.

This international patent application is based on Japanese Priority Application No. 2013-227129 filed on October 31, 2013, the entire contents of which are hereby incorporated by reference.

### LIST OF REFERENCE SYMBOLS

- 10:: radio communication system
- 100:: user equipment
- 110:: transmission and reception unit
- 120:: PDCP layer processing unit
- 130:: reception window updating determination unit
- 201, 202:: base station

## Claims

1. User equipment comprising:
a transmission and reception unit configured to transmit and receive a packet to/from a base station;
a PDCP layer processing unit configured to determine for a PDCP (Packet Data Convergence Protocol) packet received from the base station whether a sequence number of the PDCP packet is within a reception window and perform a PDCP layer operation on the PDCP packet having the sequence number falling within the reception window; and
a reception window updating determination unit configured to determine whether the packet received from the base station is a predefined updating trigger packet for causing the reception window to be updated and if the received packet is the updating trigger packet, cause the PDCP layer processing unit to update the reception window.

2. The user equipment as claimed in claim 1, wherein the updating trigger packet is a PDCP packet having only a header part, and the reception window updating determination unit determines whether a size of the PDCP packet received from the base station is equal to a PDCP header size and if the size of the received PDCP packet is equal to the PDCP header size, causes the PDCP layer processing unit to update the reception

3. The user equipment as claimed in claim 1, wherein the updating trigger packet is a PDCP data packet having a header part including a bit indicating that the PDCP data packet is the predefined updating trigger packet for causing the reception window to be updated, and the reception window updating determination unit determines whether the bit in the header part in the PDCP data packet received from the base station indicates that the PDCP data packet is the updating trigger packet and if the bit indicates that the PDCP data packet is the updating trigger packet, causes the PDCP layer processing unit to update the reception window.

4. The user equipment as claimed in claim 1, wherein the updating trigger packet is a PDCP control packet including a value of an upper end or a lower end of the reception window to be configured by the PDCP layer processing unit, and upon detecting the value of the upper end or the lower end of the reception window to be configured by the PDCP layer processing unit in the PDCP control packet received from the base station, the reception window updating determination unit causes the PDCP layer processing unit to update the reception window with the detected value of the upper end or the lower end.

5. The user equipment as claimed in claim 1, wherein the updating trigger packet is a PDCP control packet including discarding information regarding a PDCP packet discarded by the base station, and upon detecting the discarding information regarding the PDCP packet discarded by the base station in the PDCP control packet received from the base station, the reception window updating determination unit causes the PDCP layer processing unit to update the reception window based on the detected discarding information.

6. The user equipment as claimed in claim 1, wherein the transmission and reception unit uses a Capability or transmits the updating trigger packet to indicate to the base station that the user equipment is capable of updating the reception window by the updating trigger packet.

7. The user equipment as claimed in claim 6, wherein the transmission and reception unit indicates the Capability to the base station for each mode of a RLC (Radio Link Control) AM (Acknowledged Mode) and a RLC UM (Unacknowledged Mode).

8. The user equipment as claimed in claim 7, wherein a bearer for the RLC UM has a reordering function in the PDCP layer.

9. The user equipment as claimed in claim 1, wherein the updating trigger packet is a RRC (Radio Resource Control) message including a value of an upper end or a lower end of the reception window to be configured by the PDCP layer processing unit, and upon detecting the value of the upper end or the lower end of the reception window to be configured by the PDCP layer processing unit in a RRC message received from the base station, the reception window updating determination unit causes the PDCP layer processing unit to update the reception window with the detected value of the upper end or the lower end.

10. The user equipment as claimed in claim 1, wherein the updating trigger packet is a RRC message including discarding information regarding a PDCP packet discarded by the base station, and upon detecting the discarding information regarding the PDCP packet discarded by the base station in a RRC message received from the base station, the reception window updating determination unit causes the PDCP layer processing unit to update the reception window based on the detected discarding information.

11. A method for causing user equipment to update a reception window, wherein the user equipment determines for a PDCP (Packet Data Convergence Protocol) packet received from a base station whether a sequence number of the PDCP packet is within a reception window and performs a PDCP layer operation on the PDCP packet having the sequence number falling within the reception window, the method comprising:
determining whether the packet received from the base station is a predefined updating trigger packet for causing the reception window to be updated; and
if the received packet is the updating trigger packet, updating the reception window.
